# EUROPÄISCHE PATENTSCHRIFT

(11) **EP 2 278 898 B1**
(45) Veröffentlichungstag und Bekanntmachung des Hinweises auf die Patenterteilung: **20.11.2013**
(21) Anmeldenummer: 09749389.4
(22) Anmeldetag: 22.05.2009
(51) Int. Cl.: F16B 39/24, F16B 43/00, A01K 27/00, A44B 11/25

(54) **VERSCHLUSS FÜR EIN SICHERHEITSHALSBAND FÜR EIN HAUSTIER**
LOCKING MECHANISM FOR A SAFETY COLLAR FOR A DOMESTIC ANIMAL
FERMETURE DESTINÉE À UN COLLIER DE SÉCURITÉ POUR ANIMAL DOMESTIQUE

(30) Priorität: 21.05.2008 CH 764082008
(43) Veröffentlichungstag der Anmeldung: 02.02.2011
(73) Patentinhaber: STMZ Schweizerische Tiermeldezentrale AG, 6052 Hergiswil (CH)
(72) Erfinder: FRICKER, Hanns, CH-6052 Hergiswil (CH); ROSSELL, Jaime, CH-1009 Pully (CH)
(74) Vertreter: Bohest AG
(86) Internationale Anmeldenummer: PCT/CH2009/000171
(87) Internationale Veröffentlichungsnummer: WO 2009/140785

(56) Entgegenhaltungen:
- US-A- 2 574 502
- US-A- 3 131 674
- US-A- 3 704 633
- US-A- 5 548 879

## Beschreibung

Die vorliegende Erfindung betrifft einen Verschluss für ein Sicherheitshalsband für ein Haustier, insbesondere für eine Katze, und das Sicherheitsband mit diesem Verschluss.

Um entlaufene Haustiere identifizieren zu können, tragen Haustiere eine an einem Halsband angebrachte Haustiermarke mit einem darauf zu erkennenden Code oder dem Namen des Haustieres. Manche Haustierbesitzer, insbesondere Besitzer von Katzen, sind aber zurückhaltend, wenn es um die Ausrüstung ihrer Haustiere mit einem solchen Halsband geht, da die Gefahr besteht, dass das Halsband irgendwo, etwa an einem Ast, einhängen könnte und das Haustier, wenn es sich freizuzerren versucht, in der Folge Strangulationsverletzungen erleidet, die im Extremfall tödlich verlaufen können. Aus diesem Grund wurden für das Tragen von Haustiermarken spezielle Halsbänder entwickelt, welche einen Sicherheitsverschluss aufweisen. Der Sicherheitsverschluss kann sich bei einer Zugkraft, die grösser ist als ein fixer, durch die Konstruktion des Verschlusses bedingter Grenzwert, wieder öffnen. Wenn sich das Haustier mit so einem Sicherheitshalsband verhakt und sich freizuzerren versucht, wird dieser Grenzwert für die Zugkraft überschritten und.das Halsband öffnet sich, so dass das Haustier sich nicht selber stranguliert. Für Sicherheitshalsbänder dieses Typs wird beispielhaft auf die US 5,443,039 A und die US-A-3704633 verwiesen.

In der US 4,044,725 A wird ein aus Gliedern bestehendes Sicherheitshalsband beschrieben, bei dem die Glieder mittels Kugelgelenken aneinander befestigt sind. Jedes Glied weist hierzu an einem Ende einen Kugelkopf und an seinem anderen Ende eine dazu passende Kugelpfanne auf. Eines der Glieder weist an seinem einen Ende einen in der Mitte gespaltenen Kugelkopf und eine Schraube auf, die von der Kugelpfanne am anderen Ende des Gliedes in den gespaltenen Kugelkopf hineingeschraubt werden kann. Die Hälften des gespaltenen Kugelkopfs können durch Hineinschrauben der Schraube flexibel auseinandergespreizt werden. Das Kugelgelenk, das durch diesen gespaltenen Kugelkopf und die Kugelpfanne des benachbarten Gliedes gebildet wird, ist also beim Überschreiten einer bestimmten, einstellbaren Zugkraft trennbar. Diese ist umso kleiner, je weniger die Kugelhälften auseinandergespreizt sind, d.h. je weniger die Schraube in den gespaltenen Kugelkopf hineingeschraubt ist.

Der vorliegenden Erfindung liegt die Aufgabe zugrunde, einen verbesserten Verschluss für ein Sicherheitshalsband der eingangs erwähnten Art für Haustiere, insbesondere für Katzen, zu schaffen.

Diese Aufgabe wird erfindungsgemäss gelöst durch einen Verschluss für ein Sicherheitshalsband für ein Haustier, umfassend:
a) Ein erstes Endteil mit einer ersten Zunge und einer zweiten Zunge, die einen zwischen ihnen liegenden Zuhgenzwischenraum definieren; und
b) ein zweites Endteil mit einer mittleren Zunge, die in einer Verschlussrichtung in den Zungenzwischenraum des ersten Endteils einführbar ist,
   dadurch gekennzeichnet, dass
c) die erste Zunge eine erste Öffnung, die zweite Zunge eine zweite Öffnung und die mittlere Zunge eine mittlere Öffnung aufweist, wobei diese Öffnungen durchgängig sind und entweder die Form eines Rundlochs aufweisen oder die Form einer Nut aufweisen, die in Verschlussrichtung verläuft und zu der Zungenspitze hin offen ist, wobei diese Öffnungen in zusammengeschobenem Zustand des Verschlusses fluchten und wobei entweder mindestens die mittlere Öffnung nutförmig ist oder mindestens die erste und zweite Öffnung nutförmig sind; und dass
d) der Verschluss eine Stellschraube umfasst, die durch erste Öffnung, mittlere Öffnung und zweite Öffnung hindurchtritt und die, wenn die zweite Öffnung nutförmig ist, mit einer Gegenmutter verschraubbar ist oder, wenn die zweite Öffnung rundlochförmig ist, entweder mit einem in dieser Öffnung ausgebildeten Gegengewinde oder mit einer Gegenmutter verschraubbar ist; dergestalt, dass die Stellschraube beim Verschrauben mit der Gegenmutter bzw. dem Gegengewinde zu einem Zusammendrücken von erster und zweiter Zunge befähigt ist.

Bevorzugte Ausführungsvarianten des erfindungsgemässen Verschlusses ergeben sich aus den abhängigen Patentansprüchen. Gegenstand der Erfindung ist auch ein Sicherheitshalsband, das den erfindungsgemässen Verschluss aufweist.

Die Stellschraube erlaubt es, die erste und zweite Zunge einstellbar fest zusammenzudrücken, wodurch sich die Mindestzugkraft, die erforderlich ist, um in verschlossenen Zustand die mittlere Zunge aus dem Zungenzwischenraum herauszuziehen, variabel einstellen lässt. Der Zungenzwischenraum weist hierzu bevorzugt eine zu der mittleren Zunge komplementäre Form auf.

Die Stellschraube eignet sich beim erfindungsgemässen Verschluss einerseits und im Gegensatz zu den Verschlüssen des Standes der Technik zum variablen Einstellen der Mindestzugkraft, die erforderlich ist, um den Verschluss zu öffnen. Andererseits dient sie, da sie durch die drei Öffnungen von erster, zweiter und mittlerer Zunge verläuft, gleichzeitig zur transversalen Führung der beiden Endteile während des Öffnens oder Schliessens des Verschlusses, so dass dieser ohne zusätzliche seitliche Laschen oder Zungen zur transversalen Führung hergestellt werden kann.

Die Stellschraube kann einerseits eine gewöhnliche Schraube mit einem über ihrem ganzen Schaft verlaufendem Gewinde sein. Um eine Beschädigung der drei Öffnungen durch das Gewinde zu vermeiden, wird die Stellschraube hier bevorzugt in einer vorzugsweise metallischen Rundhülse geführt. Die Rundhülse kann lose in die Öffnungen eingepasst sein; wenn aber eine Gegenmutter vorhanden ist, ist die Rundhülse bevorzugt einstückig mit der Gegenmutter ausgebildet. Die Rundhülse, wenn vorhanden, ist gegen die mittlere Zunge und die erste Zunge frei beweglich. Die Stellschraube verläuft im Inneren dieser Hülse, so dass ihr Gewinde diese Nuten und Öffnungen nicht beschädigen kann. In einer anderen bevorzugten Ausführungsform weist die Stellschraube nur ein Teilgewinde auf, insbesondere dergestalt, dass alle Teile der Stellschraube, die gegen erste und mittlere Öffnung frei beweglich sein müssen, ohne Gewinde sind. In dieser Ausführungsform der Stellschraube kann unter Umständen auf die schützende Rundhülse auch verzichtet werden.

Erfindungsgemäss ist es bevorzugt, dass der Kopf der Stellschraube nicht direkt auf die erste Zunge einwirkt, sondern dass ein federndes und/oder elastisches Element, etwa eine Ringfeder oder ein ringförmiger Kern aus einem elastomeren Material (etwa aus Gummi) vorgesehen wird, das zwischen dem Kopf der Stellschraube und der ersten Zunge vorhanden ist, vorzugsweise auch unter Einsatz einer oder zweier Unterlagscheiben. Dieses federnde und/oder elastische Element erzeugt eine Gegenkraft, die dem Anpressdruck des Kopfs der Stellschraube auf die erste Zunge federnd und/oder elastisch entgegenwirkt, und erlaubt ein feineres Einstellen des Anpressdrucks der Stellschraube auf die erste Zunge.

Die Endteile und die an ihnen angebrachten Zungen können jeweils bevorzugt einstückig hergestellt werden. Die Endteile bestehen bevorzugt aus einem gängigen Kunststoff. Die mittlere Zunge kann bevorzugt starr sein; die erste und zweite Zunge können starr oder flexibel sein (siehe unten).

Die drei Öffnungen sind entweder rundlochförmig oder nutförmig, wobei entweder mindestens die beiden Öffnungen des ersten Endteils oder mindestens die eine Öffnung des zweiten Endteils nutförmig, wie vorstehend beschrieben, sind. Diese beiden Alternativen ermöglichen das Öffnen und Verschliessen der beiden Endteile, ohne dass die Stellschraube vorgängig ganz herausgeschraubt werden muss. Es könnten auch alle drei Öffnungen nutförmig sein. In einer bevorzugten Ausführungsform ist nur die mittlere Öffnung nutförmig und erste und zweite Öffnung sind rundlochförmig; in einer anderen bevorzugten Ausführungsform sind nur die erste und zweite Öffnung nutförmig und die dritte Öffnung ist rundlochförmig.

In einer ersten bevorzugten Ausführungsform sind die erste, zweiten und dritte Zunge im Querschnitt gesehen mit einem unregelmässigen Profil versehen, etwa indem die mittlere Zunge Bombierungen oder Rasten aufweisen, die in entsprechende komplementäre Aussparungen an den Innenseiten von erster und zweiter Zunge passen (oder umgekehrt). Bei dieser Ausfüh.rungsform rastet die mittlere Zunge beim Einführen in den von erster und zweiter Zunge gebildeten Zungenzwischenraum ein, so dass ein solcher Verschluss nach dem Prinzip des Formschlusses, inbesondere etwa wie ein Schnappverschluss, funktioniert. Diese Ausführungsform des Verschlusses benötigt erste und zweite Zungen aus einem flexiblen Material, etwa einem flexiblen Kunststoff, da hier das Öffnen erst dann möglich ist, wenn sich erste und zweite Zunge genügend weit durch senkrecht zur Verschlussrichtung stehende Ausweichbewegungen voneinander beabstanden, dass die besagten Unebenheiten des Profils in Form von Bombierungen oder Rasten aus den komplementären Aussparungen heraustreten können. Die Stellschraube bewirkt hier eine Einstellung des Abstandes zwischen erster und zweiter Zunge und beeinflusst somit die Leichtigkeit, mit der erste und zweite Zunge senkrecht zur Verschlussrichtung Ausweichbewegungen ausführen können. Für diese Ausführungsformen ist es besonders bevorzugt, dass der Kopf der Stellschraube nicht direkt auf die erste Zunge einwirkt, sondern dass dazwischen das besagte federnde und/oder elastisches Element, insbesondere eine Ringfeder oder ein ringförmiger Kern aus einem elastomeren Material (etwa aus Gummi) vorgesehen ist, das zwischen den Kopf der Stellschraube und der ersten Zunge gelegt ist, vorzugsweise auch unter Einsatz einer Unterlagscheibe. Das federnde und/oder elastische Element erlaubt hier nicht nur ein feineres Einstellen des Anpressdrucks der Stellschraube, es ermöglicht auch die besagten senkrecht zur Verschlussrichtung stehenden Ausweichbewegungen von erster und zweiter Zunge trotz des nahezu starren Zwangs, den das Paar aus Stellschraube und Gegenmutter (oder Gegengewinde) alleine der ersten und zweiten Zunge entgegensetzen würden. Um allfällige Bewegungen der ersten, zweiten und mittleren Zunge senkrecht zur Verschlussrichtung zu ermöglichen ist es auch bevorzugt, wenn zwischen der Stellschraube (oder der Rundhülse, in der die Stellschraube läuft) und der ersten und mittleren Öffnung ein ganz leichtes Spiel vorhanden ist.

In einer zweiten bevorzugten Ausführungsform des Verschlusses sind die Innenflächen der ersten und zweiten Zunge und die Aussenflächen der mittleren Zunge plan (vorzugsweise planparallel). Bei diesen Ausführungsformen werden die beiden Endteile wie ein Paar aus Stecker und Steckdose zusammengeschoben. Da hier beim Verschliessen oder Öffnen des Verschlusses keine Unebenheiten der Oberflächen aneinander vorbeigleiten müssen sind im Wesentlichen keine gleichzeitigen Ausweichbewegungen der ersten und zweiten Zunge senkrecht zur Verschlussrichtung erforderlich. Deshalb können hier erste und zweite Zunge, wie auch die gesamten beiden Endteile nicht nur aus einem Kunststoff, sondern auch aus einem im Wesentlichen starren Material wie etwa einem Metall geformt sein. Das Öffnen des Verschlusses geschieht hier dann, wenn die Zugkräfte, die auf die beiden Endteile einwirken, die Haftreibungskraft zwischen den Innenflächen von erster und zweiter Zunge und den Aussenflächen der mittleren Zunge überschreiten. Diese Ausführungsformen des Verschlusses funktionieren also nach dem Prinzip des Kraftschlusses. Die Einstellung der Stellschraube bewirkt hier die Einstellung des Drucks, mit dem in verschlossenem Zustand des Verschlusses die erste und zweite Zunge auf der mittleren Zunge aufliegen und bestimmt so diese besagte Haftreibungskraft. Auch hier kann zwischen Kopf der Stellschraube ein federndes und/oder elastisches Element und, optional, eine Unterlagscheibe wie vorstehend beschrieben vorgesehen sein, so dass eine feinere Einstellung des Anpressdrucks ermöglicht wird.

Mit Vorteil wird mittels der Stellschraube eine Mindestzugkraft zum Öffnen des Verschlusses eingestellt, die nicht grösser ist oder etwa gleich ist wie die Gewichtskraft des Haustieres, das ein Sicherheitshalsband mit diesem Verschluss tragen soll. Vorteilhafterweise liegt diese Mindestzugkraft im Bereich von 20 N bis 200 N, vorzugsweise im Bereich von 40 N bis 140 N, noch bevorzugter im Bereich von 50 N bis 100 N. Im Gegensatz zu den Verschlüssen des Standes der Technik kann bei den erfindungsgemässen Verschlüssen so den unterschiedlichen Gewichten und Körperkräften der Haustiere Rechnung getragen werden: Kleine Haustiere sind eher strangulationsgefährdet, benötigen daher eine kleinere eingestellte Mindestzugkraft, währenddem grössere Haustiere kräftiger sind und eine eher grösserer eingestellte Mindestzugkraft erfordern. Zur korrekten Einstellung dieser Mindestzugkraft kann auf dem den Kopf der Stellschraube eine Skala angebracht sein, die für einige beispielhafte Positionen der Stellschraube die diesen Positionen entsprechende Mindestzugkraft zum Öffnen des Verschlusses angeben. Die Werte für diese Skala können durch Zugversuche am Verschluss mit bekannten Gewichten ermittelt werden.

In einer allgemein bevorzugten Ausführungsform kann das erste Endteil oder das zweite Endteil einen Chip mit einem darin gespeicherten Code, welcher mit einem entsprechenden Lesegerät berührungslos ausgelesen werden kann, und das Haustier so identifiziert. Anhand des so ermittelbaren Codes kann der Halter des Tieres unter Zuhilfenahme einer Datenbank eruiert werden und das Tier wieder dem Halter zugeführt werden. Ein solcher Chip wird als RFID-Chip (für das englische "Radio Frequency Identification", zu deutsch "Identifizierung mit Hilfe von elektromagnetischen Wellen") bezeichnet. Durch den Einsatz eines solchen Chips erübrigt sind ein Anbringen einer herkömmlichen Erkennungsmarke am Sicherheitshalsband, das einen solchen erfindungsgemässen Verschluss enthält; andererseits erspart man dem Haustier die Implantation dieses RFID-Chips; wie es bislang bei solchen Chips üblich war. Es hat sich gezeigt, dass ein in einen erfindungsgemässen Verschluss eingebauter RFID-Chip mit den üblichen Lesegeräten leichter gelesen werden kann als wenn er in das Tier implantiert ist.

Das erfindungsgemässe Sicherheitshalsband kann, abgesehen von dem Verschluss, herkömmlich sein. Es kann etwa als Lederriemen, Plastikriemen oder aus Kunststoffgliedern gefertigt sein. Zum Einhängen des Halsbandes an die beiden Endteile weisen diese, üblicherweise an den zu den Zungen entgegengesetzten Enden, durchgängige Aufnahmeöffnungen auf. Die Enden des Halsbandes könnten aber auch auf andere Art, etwa durch Annieten oder durch Einkleben in transversale Schlitze, die an den den Zungen abgewandten Enden der Endteile vorgesehen sind, befestigt werden. Zur Verwendung als Sicherheitsverschluss für ein Haustierhalsband ist es vorteilhaft, wenn der Verschluss als Ganzes eine leicht gebogene Form aufweist, die in etwa dieselbe Krümmung hat wie das restliche Halsband, wenn es um den Hals des Haustieres angelegt ist.

Im Folgenden wird der erfindungsgemässe Verschluss unter Bezugnahme auf die beigefügten Zeichnungen detaillierter beschrieben. Es zeigen:
- Fig. 1: - Eine Draufsicht auf das erste und zweite Endteil eines erfindungsgemässen Verschlusses, bei dem erste und zweite Öffnung rundlochförmig sind und die mittlere Öffnung nutförmig ist.
- Fig. 2: - Eine Schnittdarstellung von erstem und zweitem Endteil von Figur 1, wobei der Schnitt entlang der Linie A-A von Figur 1 verläuft.
- Fig. 3: - Eine Draufsicht auf das erste und zweite Endteil eines erfindungsgemässen Verschlusses, bei dem erste und zweite Öffnung nutförmig sind und die mittlere Öffnung rundlochförmig ist.
- Fig. 4: - Eine Schnittdarstellung von erstem und zweitem Endteil von Figur 3, wobei der Schnitt entlang der Linie B-B von Figur 3 verläuft.
- Fig. 5: - Eine Draufsicht eines erfindungsgemässen gesamten Verschlusses, bei dem erstes und zweites Endteil ähnlich wie in Figuren 1 und 2 sind.
- Fig. 6: - Eine Teilschnittzeichnung des Verschlusses von Figur 5 mit einer Ringfeder als federndem Element, wobei der Schnitt von Figur 5 entlang der Linie C-C geführt ist.
- Fig. 7: - Eine Draufsicht auf die Ringfeder, die in Figur 6 von der Seite her gezeigt ist.
- Fig. 8: - Eine Teilschnittzeichnung eines Verschlusses ähnlich wie derjenige von Figur 6, aber mit einem ringförmigen Kern aus einem elastomeren Material als federndem und/oder elastischem Element.

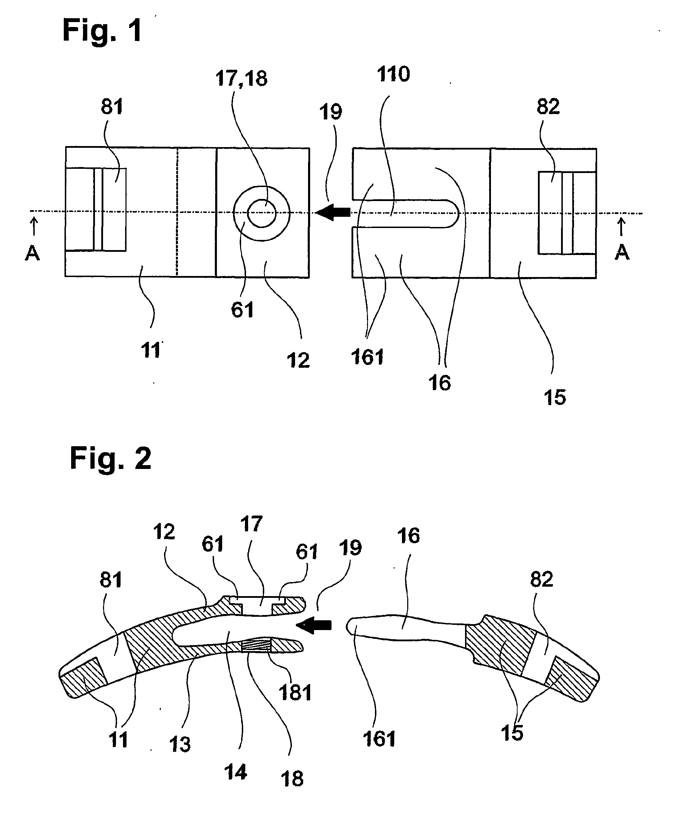

Bei dem in Fig. 1 und 2 dargestellten ersten Ausführungsbeispiel von erstem und zweitem Endteil 11, 15 sind die erste Öffnung 17 und die zweite Öffnung 18 beide rundlochförmig und die beiden Öffnungen fluchten, d.h. sie liegen in der Draufsicht übereinander. Deswegen sind für die eine gezeigte Öffnung von Fig. 1 beide Bezugszeichen 17 und 18 angegeben. Die erste Öffnung 17 ist in einer ersten Zunge 12 ausgebildet und die zweite Öffnung 18 in einer zweiten Zunge 13. Das zweite Endteil 15 weist eine mittlere Zunge 16 mit einer nutförmigen mittleren Öffnung 110 auf, die sich in Verschlussrichtung 19 ersteckt und zur Spitze der mittleren Zunge 16 hin (d.h. zur Zungenspitze 161 hin) offen ist. Wenn die mittlere Zunge 16 des zweiten Endteils 15 in Verschlussrichtung 19 in den Zungenzwischenraum 14 geschoben wird, kommt die mittlere Öffnung 110 in der Draufsicht genau unter die erste Öffnung 17 und auf die zweite Öffnung 18 zu liegen, so dass alle drei Öffnungen 17, 110 und 18 fluchten. Dies erlaubt den Durchtritt der (in den Fig. 1 und 2 nicht gezeigten) Stellschraube durch alle drei Öffnungen. In dieser Ausführungsform, wo die zweite Öffnung 18 rundlochförmig ist, kann die Stellschraube mit einem in der zweiten Öffnung 18 ausgebildeten Gewinde 181 zusammenwirken. Als Alternative zu diesem Gewinde 181 wäre es auch möglich, die zweite Öffnung 18 ohne Gewinde zu lassen und stattdessen eine zusätzliche, getrennte Gegenmutter (in den Fig. 1 und 2 nicht gezeigt) vorzusehen, die mit der Stellschraube zusammenwirken würde. Die erste, ebenfalls rundlochförmige Öffnung 17 weist eine ringförmige Vertiefung 61 auf, die zur mindestens teilweisen Versenkung des Kopfs der Stellschraube sowie eines optionalen federnden und/oder elastischem Elements, etwa einer Ringfeder oder eines ringförmigen Kerns aus einem elastomeren Material und einer optionalen Unterlagscheibe dient. Entsprechend dem bevorzugten Verwendungszweck des erfindungsgemässen Verschlusses weisen erstes Endteil 11 und zweites Endteil 15 hier je eine Aufnahmeöffnung 81 bzw. 82 auf, um die die Enden des Sicherheitshalsbandes geschlauft werden können.

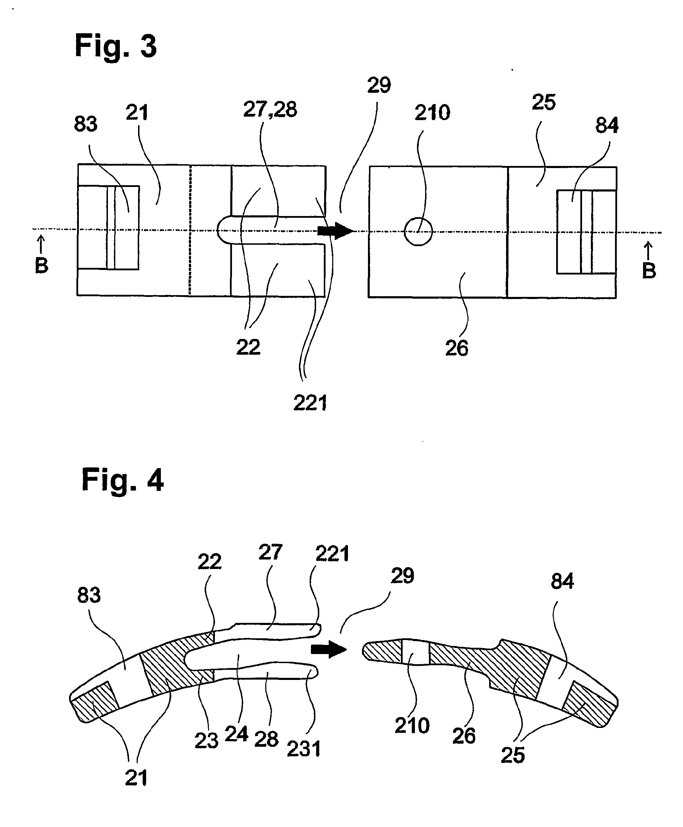

Bei dem in Fig. 3 und 4 dargestellten zweiten Ausführungsbeispiel von erstem und zweitem Endteil 21, 25 ist die erste Öffnung 27 in einer ersten Zunge 22 ausgebildet und die zweite Öffnung 28 in einer zweiten Zunge 23. Erste Öffnung 27 und zweite Öffnung 28 sind hier beide nutförmig, erstrecken sich in Verschlussrichtung 29 und sind zu den Spitzen der ersten und zweiten Zunge 22, 23 hin (d.h. zu den Zungenspitzen 221, 231 hin) offen. Erste und zweite Öffnung 27, 28 fluchten, d.h. sie liegen in der Draufsicht genau übereinander, deswegen sind für die eine gezeigte Öffnung von Fig. 3 beide Bezugszeichen 27 und 28 angegeben. Das zweite Endteil 25 weist eine mittlere Zunge 26 mit einer rundlochförmigen mittleren Öffnung 210 auf. Wenn erste und zweite Zunge 22, 23 des ersten Endteils 21 in Verschlussrichtung 29 über die mittlere Zunge 26 des zweiten Endteils 25 geschoben werden, kommt die mittlere Öffnung 210 in der Draufsicht genau unter der ersten Öffnung 27 und oberhalb der zweiten Öffnung 28 zu liegen, so dass alle drei Öffnungen 27, 210 und 28 fluchten. Dies erlaubt den Durchtritt der (in den Figuren nicht gezeigten) Stellschraube. In dieser Ausführungsform, wo erste und zweite Öffnung 27, 28 nutförmig sind, würde die Stellschraube mit einer zusätzlichen, getrennten Gegenmutter (in der Figur ebenfalls nicht gezeigt), die unterhalb der zweiten Zunge 23 wäre, zusammenwirken. Vorzugsweise würden hier sowohl zwischen dem Kopf der Stellschraube und der ersten Zunge und zwischen der Gegenmutter und der zweiten Zunge Unterlagscheiben vorgesehen. Entsprechend dem Verwendungszweck des erfindungsgemässen Verschlusses weisen erstes Endteil 21 und zweites Endteil 25 wiederum je eine Aufnahmeöffnung 83 bzw. 84 auf, um die die Enden des Sicherheitshalsbandes geschlauft werden können.

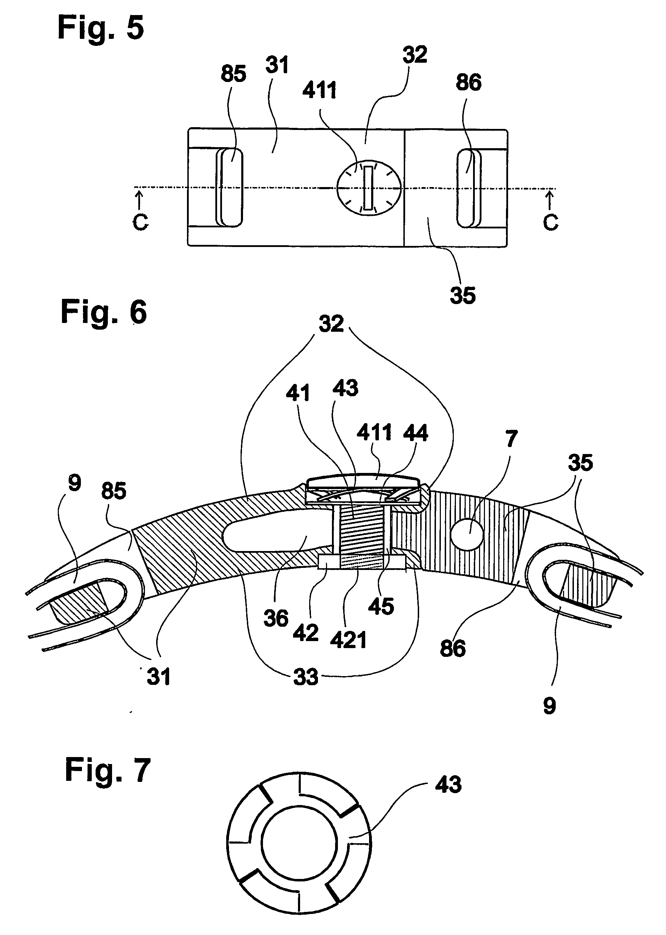

Das in Fig. 5 und 6 gezeigte Ausführbeispiel eines kompletten erfindungsgemässen Verschlusses weist zwei Endteile 31, 35 auf, die ähnlich ausgebildet sind wie in Fig. 1 und 2. Hier ist nun die Stellschraube 41 gezeigt, die mit einer Gegenmutter 42 zusammenwirkt. Die Gewinde von Stellschraube 41 und 42 sind angedeutet; das Gewinde der Gegenmutter 42 ist mit Bezugszeichen.421 versehen. Die Gegenmutter 42 ist in die zweite Zunge 33 eingesenkt. Die mittlere Zunge 36 ist hier grösstenteils nicht als Schnitt dargestellt (d.h. nicht schraffiert), da die Schnittlinie C-C genau durch die nutförmige Öffnung der mittleren Zunge 36 verläuft. Damit das Gewinde der Stellschraube 41 nicht die Öffnungen von erster, zweiter und mittlerer Zunge 32, 33, 36 beschädigt, läuft die Stellschraube 41 in einer metallischen Rundhülse 45, die entweder lose sein kann oder, bevorzugt, mit der Gegenmutter 42 einstückig ist. Die Stellschraube 41 ist hier entsprechend mit einem Vollgewinde dargestellt. Bei dieser Ausführungsform wirkt der Kopf 411 der Stellschraube 41 nicht direkt auf die erste Zunge 32 ein, sondern es sind dazwischen eine Rundfeder 43 und eine Unterlagscheibe 44 vorgesehen. Entsprechend dem primären Verwendungszweck des Verschlusses als Sicherheitshalsband für Haustiere weist das zweite Endteil 35 hier einen eingebauten RFID-Chip 7 auf; wiederum sind die Öffnungen 85, 86 für das Sicherheitshalsband und andeutungsweise auch das Sicherheitshalsband 9 selber gezeigt.

Figur 7 zeigt die in Figur 6 in der Seitenansicht gezeigte Rundfeder 43 nocheinmal in der Draufsicht. Diese Rundfeder weist vier von der Blattebene nach unten zeigende federne Lamellen auf, die im vorliegenden Fall eine Rechtsschraube darstellen. Diese Rundfeder kann etwa aus einem Ring aus einem Federstahl hergestellt werden, indem die federnden Lamellen eingestanzt und nach unten abgebogen werden.

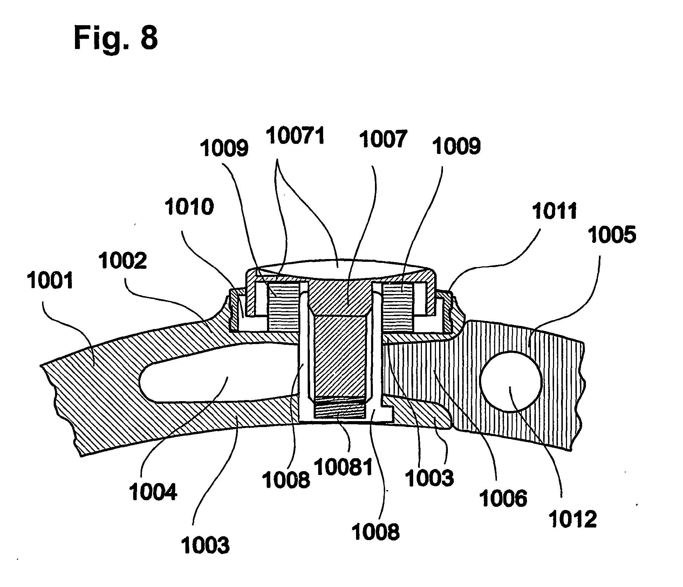

Fig. 8 zeigt einen Teil eines Ausführbeispiel eines erfindungsgemässen Verschlusses in zusammengeschobenem Zustand auf. Er weist wiederum zwei Endteile 1001, 1005 auf, die ähnlich ausgebildet sind wie die Endteile von Fig. 1 und 2; die Aufnahmeöffnungen für das Halsband sind aber hier nicht mehr gezeigt. Das erste Endteil 1001 weist eine erste Zunge 1002 und eine zweite Zunge 1003 auf; zwischen ihnen ist ein Zungenzwischenraum 1004 ausgebildet. Das zweite Endteil 1005 weist eine mittlere Zunge 1006 auf. Es ist die Stellschraube 1007 mit einem Kopf 10071 gezeigt, die mit einer Gegenmutter mit einstückig ausgebildeter metallischen Rundhülse (nicht als Schnitt, d.h nicht schraffiert dargestellt, beide zusammen mit Bezugszeichen 1008 versehen) verschraubbar ist. Der nicht geschnitten, d.h. nicht schraffiert gezeigte linsenförmige Teil des Kopfes 10071 deutet einen darin ausgebildeten Spalt an, mittels dem die Stellschraube 1007 mit einem Schraubenzieher oder mit einem Fingernagel zwecks Regulierung des Anpressdrucks verstellt werden könnte. Die miteinander verschraubten Gewinde von Stellschraube 1007 und Gegenmutter/Rundhülse 1008 sind mit Bezugszeichen 10081 versehen. Erstes bzw. zweites Endteil 1001, 1005 würden hier je eine erste bzw. zweite rundlochförmige Öffnung zum Durchtritt der Stellschraube 1007 aufweisen (in der Figur sind diese Öffungen nicht gezeigt). Die mittlere Zunge 1006 würde hier eine nutförmige Öffnung aufweisen. Die mittlere Zunge 1006 ist hier grösstenteils nicht als Schnitt, d.h. nicht schraffiert dargestellt, da die Schnittlinie genau durch diese nutförmige Öffnung der mittleren Zunge 1006 verläuft (die nutförmige Öffnung liegt also räumlich innerhalb des Zungenzwischenraums 1004). Der Kopf 10071 der Stellschraube 1007 wirkt nicht direkt auf die erste Zunge 1002 ein; dazwischen ist ein federndes und/oder elastisches Element in Form eines ringförmigen Kerns 1009 aus Gummi vorgesehen. Der Kopf der Stellschraube 1007 ist in eine ringförmige Vertiefung 1010 eingelassen, wobei zusätzlich eine metallische ringförmige Fassung 1011 für den Kopf 10071 vorgesehen ist. Angedeutet ist wiederum ein in das zweite Endteil 1005 eingebauter RFID-Chip 1012.

## Patentansprüche

1. Verschluss für eine Sicherheitshalsband für ein Haustier umfassend:
a) Ein erstes Endteil (11, 21, 31, 1001) mit einer ersten Zunge (12, 22, 32, 1002) und einer zweiten Zunge (13, 23, 33, 1003), die einen zwischen ihnen liegenden Zungenzwischenraum (14, 24, 1004) definieren; und
b) ein zweites Endteil (15, 25, 35, 1005) mit einer mittleren Zunge (16, 26, 36, 1006), die in einer Verschlussrichtung (19, 29) in den Zungenzwischenraum (14, 24, 1004) des ersten Endteils (11, 21, 31, 1001) einführbar ist, wobei
c) die erste Zunge (12, 22, 32, 1002) eine erste Öffnung (17, 2.7), die zweite Zunge (13, 23, 1003) eine zweite Öffnung (18, 28) und die mittlere Zunge (16, 26, 36, 1006) eine mittlere Öffnung (110, 210) aufweist, wobei diese Öffnungen durchgängig sind und entweder die Form eines Rundlochs aufweisen oder die Form einer Nut aufweisen, die in Verschlussrichtung (19, 29) verläuft und zu der Zungenspitze (161, 221, 231) hin offen ist, wobei diese Öffnungen in zusammengeschobenem Zustand des Verschlusses fluchten und entweder mindestens die mittlere Öffnung (110) nutförmig ist oder mindestens die erste (27) und zweite (28) Öffnung nutförmig sind; und dass
d) der Verschluss eine Stellschraube (41, 1007) umfasst, die durch erste Öffnung (17, 27), mittlere Öffnung (110, 210) und zweite Öffnung (18, 28) hindurchtritt und die, wenn die zweite Öffnung (28) nutförmig ist, mit einer Gegenmutter (42) verschraubbar ist oder, wenn die zweite Öffnung (18) rundlochförmig ist, entweder mit einem in dieser Öffnung ausgebildeten Gegengewinde (181) oder mit einer Gegenmutter (42, 1008) verschraubbar ist; dergestalt, dass die Stellschraube (41, 1007) beim Verschrauben mit der Gegenmutter (42, 1008) bzw. dem Gegengewinde (181) zu einem Zusammendrücken von erster (12, 22, 32, 1002) und zweiter (13, 23, 33, 1003) Zunge befähigt ist.

2. Verschluss nach Anspruch 1, **dadurch gekennzeichnet, dass** erste (17) und zweite (18) Öffnung rundlochförmig sind und die mittlere Öffnung (110) nutförmig ist.

3. Verschluss nach Anspruch 2, **dadurch gekennzeichnet, dass** die Stellschraube (41, 1007) mit einer Gegenmutter (42, 1008) verschraubbar ist.

4. Verschluss nach Anspruch 2 oder 3, **dadurch gekennzeichnet, dass** die erste Zunge (12, 1002) eine ringförmige Vertiefung (61, 1010) zur Aufnahme des Kopfs (411, 10071) der Stellschraube (41, 1007) aufweist.

5. Verschluss nach Anspruch 1, **dadurch gekennzeichnet, dass** erste (27) und zweite (28) Öffnung nutförmig sind und die mittlere Öffnung (210) rundlochförmig ist.

6. Verschluss nach einem der Ansprüche 1 bis 5, **dadurch gekennzeichnet, dass** der Kopf (411, 10071) der Stellschraube (41, 1007) über ein federndes und/oder elastisches Element, insbesondere eine Rundfeder (43) oder einen ringförmigen Kern aus einem elastomeren Material (1009), und gewünschtenfalls über eine Unterlagscheibe (44) auf der ersten Zunge (32, 1002) aufliegt.

7. Verschluss nach Anspruch 6, **dadurch gekennzeichnet, dass** in verschlossenem Zustand des Verschlusses erstes Endteil (11, 21, 31, 1001) und zweites Endteil (15, 25, 35, 1005) mittels Formschluss zwischen erster Zunge (12, 22, 32, 1002), mittlerer Zunge (16, 26, 36, 1006) und zweiter Zunge (13, 23, 33, 1003) miteinander verbunden sind, dass erste Zunge (12, 22, 32, 1002) und zweite Zunge (13, 23, 33, 1003) flexibel sind, und dass die Stellschraube (41, 1007) zur Einstellung des Abstandes zwischen erster Zunge (12, 22, 32, 1002) und zweiter Zunge (13, 23, 33, 1003) befähigt ist.

8. Verschluss nach einem der Ansprüche 1 bis 6, **dadurch gekennzeichnet, dass** in verschlossenem Zustand des Verschlusses erstes Endteil und zweites Endteil mittels Kraftschluss zwischen erster Zunge, mittleren Zunge und zweiter Zunge miteinander verbunden sind, und dass die Stellschraube zur Einstellung des Drucks, mit dem erste Zunge und zweite Zunge an der mittleren Zunge anliegen, befähigt ist.

9. Verschluss nach einem der Ansprüche 1 bis 8, **dadurch gekennzeichnet, dass** entweder das erste Endteil (11, 21, 31, 1001) oder das zweite Endteil (15, 25, 35, 1005) einen eingebauten RFID-Chip (7, 1012) aufweist._

10. Sicherheitshalsband für ein Haustier, insbesondere für eine Katze, umfassend einen Verschluss wie in einem der Ansprüche 1 bis 9 definiert.

## Claims

1. Locking mechanism for a safety collar for a pet, comprising:
a) a first end part (11, 21, 31, 1001) with a first tongue (12, 22, 32, 1002) and a second tongue (13, 23, 33, 1003), which define a tongue intermediate space (14, 24, 1004) lying between them; and
b) a second end part (15, 25, 35, 1005) with a central tongue (16, 26, 36, 1006) that can be inserted in a locking direction (19, 29) into the tongue intermediate space (14, 24, 1004) of the first end part (11, 21, 31, 1001), whereby
c) the first tongue (12, 22, 32, 1002) has a first opening (17, 27), the second tongue (13, 23, 1003) has a second opening (18, 28) and the central tongue (16, 26, 36, 1006) has a central opening (110, 210), whereby these openings pass through the tongues and either have the form of a round hole or have the form of a groove which extends in the locking direction (19, 29) and is open toward the tongue tip (161, 221, 231), whereby these openings are aligned in the pushed-together state of the locking mechanism and either at least the central opening (110) is in the form of a groove or at least the first (27) and second (28) openings are in the form of grooves; and that
d) the locking mechanism comprises an adjusting screw (41, 1007), which passes through the first opening (17, 27), the central opening (110, 210) and the second opening (18, 28) and which, when the second opening (28) is in the form of a groove, can be screwed together with a mating nut (42) or, when the second opening (18) is in the form of a round hole, can be screwed together either with a counterthread (181) formed in this opening or with a mating nut (42, 1008), such that the adjusting screw (41, 1007), when it is screwed together with the mating nut (42, 1008) or the counterthread (181), is able to squeeze the first (12, 22, 32, 1002) and second (13, 23, 33, 1003) tongues together.

2. Locking mechanism according to claim 1, **characterized in that** the first (17) and second (18) openings are in the form of round holes and the central opening (110) is in the form of a groove.

3. Locking mechanism according to claim 2, **characterized in that** the adjusting screw (41, 1007) can be screwed together with a mating nut (42, 1008).

4. Locking mechanism according to claim 2 or 3, **characterized in that** the first tongue (12, 1002) has an annular recess (61, 1010) for receiving the head (411, 10071) of the adjusting screw (41, 1007).

5. Locking mechanism according to claim 1, **characterized in that** the first (27) and second (28) openings are in the form of grooves and the central opening (210) is in the form of a round hole.

6. Locking mechanism according to one of claims 1 to 5, **characterized in that** the head (411, 10071) of the adjusting screw (41, 1007) rests on the first tongue (32, 1002) via a resilient and/or elastic element, in particular a round spring (43) or an annular core made of an elastomeric material (1009), and if desired via a washer (44).

7. Locking mechanism according to claim 6, **characterized in that** in the locked state of the locking mechanism the first end part (11, 21, 31, 1001) and the second end part (15, 25, 35, 1005) are connected together by means of a form fit between the first tongue (12, 22, 32, 1002), the central tongue (16, 26, 36, 1006) and the second tongue (13, 23, 33, 1003), that the first tongue (12, 22, 32, 1002) and the second tongue (13, 23, 33, 1003) are flexible, and that the adjusting screw (41, 1007) is able to set the distance between the first tongue (12, 22, 32, 1002) and the second tongue (13, 23, 33, 1003).

8. Locking mechanism according to one of claims 1 to 6, **characterized in that** in the locked state of the locking mechanism the first end part and the second end part are connected together by means of a force fit between the first tongue, the central tongue and the second tongue, and that the adjusting screw is able to set the pressure with which the first tongue and the second tongue adhere to the central tongue.

9. Locking mechanism according to one of claims 1 to 8, **characterized in that** either the first end part (11, 21, 31, 1001) or the second end part (15, 25, 35, 1005) has a built-in RFID chip (7, 1012).

10. Safety collar for a pet, in particular for a cat, comprising a locking mechanism as defined in one of claims 1 to 9.

## Revendications

1. Fermeture pour un collier de sécurité pour un animal domestique, comprenant :
a) une première partie terminale (11, 21, 31, 1001) avec une première languette (12, 22, 32, 1002) et une seconde languette (13, 23, 33, 1003), qui définissent un espace intermédiaire de languette (14, 24, 1004) située entre elles ; et
b) une seconde partie terminale (15, 25, 35, 1005) avec une languette médiane (16, 26, 36, 1006) qui peut être introduite dans une direction de fermeture (19, 29) dans l'espace intermédiaire de languette (14, 24, 1004) de la première partie terminale (11, 21, 31, 1001), dans laquelle
c) la première languette (12, 22, 32, 1002) comporte une première ouverture (17, 27), la seconde languette (13, 23, 1003) comporte une seconde ouverture (18, 28) et la languette médiane (16, 26, 36, 1006) comporte une ouverture médiane (110, 210), telles que ces ouvertures sont traversantes et présentent soit la forme d'un trou rond soit la forme d'une rainure, qui s'étend en direction de fermeture (19, 29) et qui est ouverte en direction de la pointe de languette (161, 221, 231), dans laquelle ces ouvertures sont alignées dans l'état rassemblé de la fermeture et dans laquelle ou bien au moins l'ouverture médiane (110) est en forme de rainure ou bien la première (27) et la seconde (28) ouverture sont en forme de rainures ; et
d) la fermeture comprend une vis de positionnement (41, 1007), qui traverse la première ouverture (17, 27), l'ouverture médiane (110, 210) et la seconde ouverture (18, 28) et qui, quand la seconde ouverture (28) est en forme de rainure, peut être vissée avec un contre-écrou (42) ou bien, quand la seconde ouverture (18) est en forme de trou rond, peut être vissée avec un taraudage antagoniste (181) réalisé dans cette ouverture ou peut être vissée avec un contre-écrou (42, 1008) ; de telle façon que la vis de positionnement (41, 1007), lors du vissage avec le contre-écrou (42, 1008) ou avec le taraudage antagoniste (181), est capable de comprimer ensemble la première languette (12, 22, 32, 1002) et la seconde languette (13, 23, 33, 1003).

2. Fermeture selon la revendication 1, **caractérisée en ce que** la première (17) et la seconde ouverture (18) sont en forme de trou rond et l'ouverture médiane (110) est en forme de rainure.

3. Fermeture selon la revendication 2, **caractérisée en ce que** la vis de positionnement (41, 1007) est susceptible d'être vissée avec un contre-écrou (42, 1008).

4. Fermeture selon la revendication 2 ou 3, **caractérisée en ce que** la première languette (12, 1002) comporte un renfoncement (61, 1010) de forme annulaire pour loger la tête (411, 10071) de la vis de positionnement (41, 1007).

5. Fermeture selon la revendication 1, **caractérisée en ce que** la première (27) et la seconde (28) ouvertures sont en forme de rainure et l'ouverture médiane (210) est en forme de trou rond.

6. Fermeture selon l'une des revendications 1 à 5, **caractérisée en ce que** la tête (411, 10071) de la vis de positionnement (41, 1007) s'applique contre la première languette (32, 1002) via un élément à effet ressort et/ou élastique, en particulier un ressort en rond (43) ou un noyau de forme annulaire en un matériau élastomère (1009), et si désiré via une rondelle intercalaire (44).

7. Fermeture selon la revendication 6, **caractérisée en ce que**, dans l'état fermé de la fermeture, la première partie terminale (11,21,31, 1001) et la seconde partie terminale (15, 25, 35, 1005) sont reliées l'une à l'autre au moyen d'une coopération de formes entre la première languette (12, 22, 32, 1002), la languette médiane (16, 26, 36, 1006) et la seconde languette (13, 23, 33, 1003), **en ce que** la première languette (12, 22, 32, 1002) et la seconde languette (13, 23, 33, 1003) sont flexibles, et **en ce que** la vis de positionnement (41, 1007) est capable de régler la distance entre la première languette (12, 22, 32, 1002) et la seconde languette (13, 23, 33, 1003).

8. Fermeture selon l'une des revendications 1 à 6, **caractérisée en ce que**, dans l'état fermé de la fermeture, la première partie terminale et la seconde partie terminale sont reliées l'une à l'autre au moyen d'une coopération de forces entre la première languette, la languette médiane et la seconde languette, et **en ce que** la vis de positionnement est capable de régler la pression avec laquelle la première languette et la seconde languette s'appliquent contre la languette médiane.

9. Fermeture selon l'une des revendications 1 à 8, **caractérisée en ce que** soit la première partie terminale (11, 21, 31, 1001) soit la seconde partie terminale (15, 25, 35, 1005) comprend une puce RFID intégrée (7, 1012).

10. Collier de sécurité pour un animal domestique, en particulier pour un chat, comprenant une fermeture telle que définie dans l'une des revendications 1 à 9.
